# EUROPÄISCHE PATENTSCHRIFT

(11) **EP 3 204 561 B1**
(45) Veröffentlichungstag und Bekanntmachung des Hinweises auf die Patenterteilung: **22.08.2018**
(21) Anmeldenummer: 15775448.2
(22) Anmeldetag: 06.10.2015
(51) Int. Cl.: F16K 31/34, F16K 47/02, G05D 7/01, E03D 1/32

(54) **FÜLLVENTIL**
FILL VALVE
VANNE DE REMPLISSAGE

(30) Priorität: 07.10.2014 DE 102014114548
(43) Veröffentlichungstag der Anmeldung: 16.08.2017
(73) Patentinhaber: TECE GmbH, 48282 Emsdetten (DE)
(72) Erfinder: SEIDEL, Wolfgang, 32457 Porta Westfalica (DE)
(74) Vertreter: Lippert Stachow Patentanwälte Rechtsanwälte
(86) Internationale Anmeldenummer: PCT/EP2015/073055
(87) Internationale Veröffentlichungsnummer: WO 2016/055481

(56) Entgegenhaltungen:
- EP-A2- 1 199 502
- EP-A2- 1 862 604
- WO-A1-2004/083698
- WO-A1-2007/105020
- WO-A1-2010/098750
- WO-A1-2013/117876
- WO-A1-2013/178912
- FR-A1- 2 369 615

## Beschreibung

Die Erfindung betrifft ein Füllventil zum Befüllen eines Spülkastens mit einer Flüssigkeit, insbesondere mit Wasser, wobei das Füllventil einen Zulauf mit einer einen Durchflussregler aufweisenden Drosselvorrichtung zur Druckverminderung der in Strömungsrichtung einströmenden Flüssigkeit aufweist.

Ein Problem bei derartigen Füllventilen ist, dass das Einströmen der Flüssigkeit durch die Drosselvorrichtung in das Füllventil mit einer leicht als störend empfundenen Geräuschentwicklung verbunden ist.

Ein gattungsgemäßes, komplex aufgebautes Füllventil mit Durchflussregler wird in der EP 1 862 604 A2 beschrieben. Ferner ist in WO 2004/083698 A1 ein Durchflussmengenregler offenbart. Dieser Durchflussmengenregler weist ein Gehäuse auf, in dem ein Gehäusekern angeordnet ist. Zwischen Gehäuse und Gehäusekern ist ein Durchflussquerschnitt bereitgestellt. An dem Gehäuse ist zum Gehäusekern hinweisend eine Dichtlippe vorgesehen. Mit steigendem Druck nähert sich die Dichtlippe dem Gehäusekern an zum Verringern des Strömungsquerschnitts. Ferner ist in FR 2 369 615 A1 ein Durchflussmengenregler mit einer Einström- und einer Ausströmöffnung offenbart. Der Durchflussmengenregler weist eine Membran auf, die sich mit steigendem Strömungsdruck der Ausströmöffnung zunehmend annähert zum zunehmenden Verschließen der Ausströmöffnung. Ferner ist WO 2013/178912 A1 ein Ventil offenbart, das einen Fluiddurchfluss nur in einer Durchlassrichtung durchlässt und in einer entgegengesetzten Sperrrichtung sperrt. Dabei ist eine Membran vorgesehen, die an einer Seite einer Durchflussöffnung anliegt. Bei einer Fluidströmung in der Durchlassrichtung wird die Membran von der Durchlassöffnung abgehoben zum Freigeben eines Durchflussquerschnitts, bei einer Fluidströmung in der Sperrrichtung wird die Membran abdichtend gegen die Öffnung gepresst. Ferner ist in WO 2007/105020 A1 ein Ventil offenbart, das einen Fluidstrom im Wesentlichen nur in einer Durchflussrichtung zulässt und in einer Sperrrichtung im Wesentlichen sperrt. Dabei ist eine Membran vorgesehen, die auf einem Oberflächenabschnitt aufliegt, in dem eine Durchflussöffnung vorgesehen ist. In der Durchflussrichtung wird die Membran von der Oberfläche abgehoben zum Freigeben eines Durchflussquerschnitts. In der Sperrrichtung wird die Membran gegen die Oberfläche gepresst zum.Verschließen der Durchflussöffnung. Allerdings weisen die Membran und/oder die Oberfläche, auf der die Membran aufliegt, Unregelmäßigkeiten auf, so dass bei einem geringen Fluiddruck in der Sperrrichtung weiterhin ein geringer Strömungsquerschnitt bereitgestellt ist, der erst bei dem Auftreten eines erheblichen Fluiddrucks in der Sperrrichtung komplett verschlossen ist, wenn die Membran vollständig an der Oberfläche um die Durchflussöffnung anliegt. Ferner ist in WO 2013/117876 A1 ein Ventil offenbart, das einen Fluidstrom nur in einer Durchflussrichtung zulässt und in einer Sperrrichtung sperrt. Dabei ist eine Membran vorgesehen, die an einer Seite einer Durchflussöffnung anliegt und die bei einer Fluidströmung in der Durchlassrichtung von der Durchflussöffnung abgehoben wird zum Freigeben eines Durchflussquerschnitts, wohingegen sie bei einer Fluidströmung in der Sperrrichtung gegen die Öffnung gepresst wird. Ferner ist in EP 1 199 502 A2 ein Durchlassventil offenbart, bei dem ein Dämpfungselement zum Reduzieren der Strömungsgeräusche durch das Ventil vorgesehen ist, wobei das Dämpfungselement hierzu eine Sperrfläche aufweist, die einen Durchflussquerschnitt des Ventils abschnittsweise sperrt und von der aus sich Arme in der Strömungsrichtung weg erstrecken. Ferner ist in WO 2010/098750 A1 ein Sperrventil offenbart, das einen Fluidstrom sperrt, sobald der Fluiddruck einen vorbestimmten Schwellwert überschreitet. Hierzu weist das Sperrventil eine Membran auf, die in Abhängigkeit von dem Fluiddruck verformt wird und in Abhängigkeit von ihrer Verformung an einem Gehäuse zur Anlage kommt, um den Fluidstrom zu sperren.

Eine Aufgabe der Erfindung ist, ein gattungsgemäßes Füllventil bereitzustellen, bei dem die Strömungsgeräusche beim Befüllen weiter reduziert sind.

Die gestellte Aufgabe wird erfindungsgemäß durch die Merkmale des Anspruches 1 gelöst. Vorteilhafte Weiterbildungen werden in den Unteransprüchen beschrieben. Erfindungsgemäß ist der Durchflussregler als Volumenstromregelung zum Erhalt einer Volumenstromkonstanz in Abhängigkeit von dem Fließdruck der Flüssigkeit am Zulauf ausgebildet, um Strömungsgeräusche beim befüllen des Spülkastens zu reduzieren, wobei die Volumenstromregelung einen sich über den Strömungsquerschnitt des Zulaufs erstreckenden Träger mit zumindest einer Primäröffnung aufweist, die mittels einer vorgeschalteten Membran mit Erhöhung des Fließdruckes fortschreitend dichtend überdeckbar bzw. mit Erniedrigung derselben fortschreitend freigebbar angeordnet ist, wobei die Volumenstromregelung mindestens eine Sekundäröffnung aufweist, die permanent geöffnet ausgebildet ist, wodurch gewährleistet ist, dass ein Teil der Flüssigkeit die Volumenstromregelung auch im Falle einer vollständig abdichtenden Überdeckung der zumindest einen Primäröffnung so lange durchströmt, wie der Fließdruck der Flüssigkeit an der zumindest einen Sekundäröffnung größer Null ist, wobei die zumindest eine Sekundäröffnung von einer Innenwandung begrenzt wird, die zur Reduktion von Schallemission beim Durchfluss aufgeraut und/oder gedimpelt ausgebildet ist.

Die Geräuschentwicklung beim Befüllen des Wasserkastens durch das Füllventil hängt unter anderem von dem Volumenstrom sowie von dessen Änderungen ab. Es ist beim Befüllen des Wasserkastens üblicherweise eine starke Abhängigkeit des Volumenstroms und damit der Füllzeit von dem anliegenden Fließdruck zu beobachten. Ferner ändert sich die Geräuschentwicklung mit der Änderung des Volumenstromes. Abgesehen davon, dass sich mit Erhöhung des Volumenstromes auch dessen Fließgeräusche verstärken, können auch allgemein, da Änderungen stärker ins Bewusstsein dringen, Änderungen der Geräuschentwicklung leicht als entsprechend störend empfunden werden. Je geringer die Abweichungen der Volumenstromkonstanz bei sich änderndem Fließdruck sind, desto geringer ist die als störend empfundene Geräuschentwicklung. Bei bekannten Drosseln steigt der Volumenstrom mit Vergrößerung des Drucks an. Bei der erfindungsgemäßen Drossel hingegen treten infolge der Volumenstromkonstanz auch bei höherem Drücken keine erhöhten Fließgeräusche auf.

Die Volumenstromkonstanz kann jeweils so aufgefasst werden, dass der Volumenstrom in etwa konstant bleibt und somit Abweichungen nach oben und/oder nach unten aufweisen kann. Diese Abweichungen können in einem Rahmen von bis zu ±25%, vorzugsweise von bis zu ±15% und idealerweise von wenigen Prozentpunkten, wie bis zu ±10%, eines Mittelwerts liegen. Der Fließdruck, auch dynamischer bzw. hydrodynamischer Druck genannt, ergibt sich aus der Differenz des Gesamtdruckes und des Druckverlustes infolge eines Strömens der Flüssigkeit in einer Leitung.

Erfindungsgemäß ist vorgesehen, dass die Volumenstromregelung einen sich über den Strömungsquerschnitt des Zulaufs erstreckenden Träger mit zumindest einer Primäröffnung aufweist. Die Primäröffnung kann in Abhängigkeit des Fließdruckes bzw. des Gesamtdrucks der Flüssigkeit mit Erhöhung des Drucks fortschreitend dichtend überdeckbar bzw. mit Erniedrigung desselben fortschreitend freigebbar angeordnet sein. Der Strömungsquerschnitt der Primäröffnung kann kleiner als der des Zuflusses ausgebildet sein, welches im Sinne einer Drossel eine Druckminderung der Flüssigkeit an der Primäröffnung hervorruft. Vorzugsweise ist zur Volumenstromregelung der Primäröffnung eine Membran vorgeschaltet. Sie ist in Strömungsrichtung vor der Primäröffnung angeordnet. Diese Konstruktion mit Träger ermöglicht eine einfache Konstruktion der Volumenstromregelung.

Vorteilhaft einfach kann der Träger einstückig beispielsweise als Spritzgussteil, insbesondere als Kunststoffspritzgussteil ausgebildet sein.

Wird der Fließdruck eingangsseitig erhöht, so erfolgt eine fortschreitende Überdeckung der Primäröffnung, welches eine Verminderung des strömungswirksamen Strömungsquerschnittes der Primäröffnung und damit eine Erhöhung der Fließgeschwindigkeit der Flüssigkeit an den Primäröffnungen und zugleich eine weitere Druckminderung in der Flüssigkeit bewirkt. Diese Überdeckung kann vorteilhaft dichtend erfolgen. Wird das Füllventil geschlossen, so findet ein Druckausgleich zwischen den Räumen in Strömungsrichtung vor und hinter der Primäröffnung statt, wodurch dieselbe wieder freigegeben wird. Hierzu kann die Überdeckung zur Überdeckung der Primäröffnung in Strömungsrichtung durch den Druck unter Aufbau einer Rückstellkraft gegen die Primäröffnung geführt werden. Mit dem Druckausgleich kann die Überdeckung unter Abbau der Rückstellkraft in ihre Ausgangsposition zurückgebracht, insbesondere zurückgeführt werden. Es kann die vom Fließdruck abhängige Regelung des Volumenstromes automatisch und selbst geregelt erfolgen.

Die Membran kann flexibel ausgebildet sein. Vorteilhaft wegen einer leichten Biegsamkeit und Flexibilität kann die Membran unbelastet als Scheibe, insbesondere als Kreisscheibe ausgebildet sein. Sie kann einstückig beispielsweise aus einem Butadien-Kautschuk gefertigt sein.

Es kann in einer Weiterbildung des Füllventils vorgesehen sein, dass die Membran unter Erhöhung des Fließdrucks der Flüssigkeit in eine Dichtungsposition hinein dichtend gegen die Primäröffnung führbar ist. Wird der Flüssigkeitsstrom in Strömungsrichtung hinter der Membran dem Durchflussregler abgesperrt, so findet hinter der Membran ein Druckausgleich mit dem Druck vor der Membran statt, wodurch die Membran flexibel wieder in eine Offenposition, in der der Fließdruck gleich oder etwa gleich Null ist, zurück schwingen kann.

In einer vorteilhaften Ausführungsform des Füllventils kann die Membran so in der Volumenstromregelung angeordnet sein, dass sie über die Regelung des Durchflusses unter steigendem Fließdruck in eine definierte gebogene oder gekrümmte Form gebracht werden. Diese Formdefinition der Membran kann durch konstruktive Maßnahmen erfolgen, mittels derer ein für die Dichtungsposition vorgesehener Ausnahmeraum für die Membran begrenzt wird. Über die definierte Form der Membran in der Dichtungsposition bzw. auf dem Verformungsweg in die Dichtungsposition hinein und die Werkstoffwahl kann das Regelverhalten der Membran entschieden beeinflusst werden.

Die gebogene oder gekrümmte Form der Membran kann so ausgebildet sein, dass sie einen gekrümmten Raum, insbesondere einen einzigen gekrümmten Raum begrenzt. Insbesondere kann sie auf eine sphärische Form oder annähernd sphärische Form gebracht werden. Annähernd heißt, dass die Form auch Abflachungen und andere Änderungen hinsichtlich ihrer sphärischen Krümmung aufweisen kann.

Die Abflachung kann sich durch ein definiertes Abstützen der Membran an dem Stützkörper ausbilden. Hierzu kann der Abstützköper vorzugsweise radial innen zur Membran eine Abstützfläche aufweisen.

Die Distanzkörper können in einer Weiterbildung des Füllventils unter Ausbildung eines Zwischenraumes radial zu der Abstützfläche beabstandet angeordnet sein. Damit so kann sich die Membran unter weiterer Verspannung zwischen Abstützfläche und Distanzköper in den Zwischenraum zu den Primäröffnungen hin durchbiegen. Hierbei kann die Durchbiegung unter Ausbildung einer Wulst, insbesondere ringartigen Wulst erfolgen. Insbesondere kann die Membran kann in der Dichtungsposition bezüglich einer radialenaxialen Schnittebene ein W-förmiges Profil aufweisen. Die Abstützung der Membran kann bereits auf dem Wege von der Offenposition in die Dichtungsposition hinein oder in der Dichtungsposition auftreten.

Von der Kräftesymmetrie her günstig, kann die gekrümmte räumliche Form der Membran die oder etwa die einer vorzugsweise im Zenit abgeflachten Hohlellipsoidkalotte sein. Dieser Ellipsoid kann als Grundfläche eine Ellipse oder, als Sonderfall der Ellipse, einen Kreis aufweisen. Etwa die Form bedeutet, dass sie von dieser eher mathematischen Form, insbesondere in der Art der Abflachung, definiert abweichen kann, wobei hierüber eine weitere Verspannung der Membran erzielt werden kann.

Infolge der elastischen Verformung der Membran in die definierte gebogene oder gekrümmte Form kann die Membran definiert verspannt werden, wodurch sie einer weiteren Verformung, wie einem Geräusch erzeugenden Schwingen, einen definierten Verformungswiderstand entgegensetzt. Diese räumliche Verformung zur definierten gekrümmten Form bewirkt somit ein stabileres Regelverhalten, indem das Schwingen der Membran, für welches sie in ihrer flachen, d.h. ungekrümmten Form neigt, vermieden werden kann. Dieses Schwingen macht sich in bestimmten Druckbereichen dadurch bemerkbar, dass der Regler den Volumenstrom stärker als erforderlich drosselt und die Flüssigkeit abgebremst wird, um dann den Flüssigkeitsstrom unmittelbar wieder weniger zu drosseln und die Flüssigkeit wieder stärker zu beschleunigen. Dieses Verhalten bewirkt ein Schwingen innerhalb des gesamten Leitungssystems des Füllventils und damit eine entsprechende Geräuschemission. Besonders effektiv ist die Geräuschverminderung in den kritischen Bereichen der Volumenstromregelung, in denen die Änderung des Volumenstroms besonders groß ist und damit das Auftreten von Schwingungen entsprechend besonders stark ist. Dieser kritische Bereich ist insbesondere zu beobachten, wenn der Volumenstrom durch partielle Schließung der ersten Öffnungen bereits stark vermindert ist.

In einer vorteilhaften Weiterbildung des Füllventils kann vorgesehen sein, dass die Membran in der Offenposition flach ausgebildet ist. Sie kann einen flachen Körper aufweisen. Diese Form hat den Vorteil, dass die Membran bereits bei geringen Strömungsgeschwindigkeiten beginnen kann, sich räumlich verformen. Die Membran kann in der Offenposition parallel zum Öffnungsquerschnitt der ersten Öffnung angeordnet sein. Insbesondere kann sich die Membran mit Vergrößerung des Fließdrucks zu der ersten Öffnung hin sphärischen auswölben und zur weiteren Abdichtung der ersten Öffnung vorzugsweise im Zenit ihrer gekrümmten Form an dem Stützkörper zur Anlage kommen. Die Membran kann in der Dichtungsposition eine im Zenit abgeflachte sphärische Form, insbesondere eine im Zenit abgeflachte Hohlkugelkalotte oder Hohlellipsoidkalotte ausbilden. In einer anderen Ausführungsform des Füllventils kann die Membran bereits in der Offenposition gekrümmt, insbesondere sphärisch ausgebildet sein. Sie kann so angeordnet sein, dass sie sich in der Offenposition bereits in Fließrichtung zu dem Träger und zwar zur ersten Öffnung hin wölbt und dass sie dann, wie oben beschrieben, hier jedoch unter Verstärkung der Krümmung, in die definierte gekrümmte Form in die Dichtungsposition hinein gebracht wird. Zu ihrer Halterung und Positionierung kann die Membran in der Offenposition der Volumenstromregelung in Strömungsrichtung vor und in einem zur Strömungsrichtung axialen Abstand zu der Primäröffnung gehalten angeordnet sein. Zur axialen Beabstandung kann mindestens ein Distanzkörper vorgesehen sein, an dem sich die Membran axial abstützt. In einer Schließposition der Volumenstrombegrenzung kann die Membran insbesondere unter Ausbildung der oben beschriebenen gekrümmten, insbesondere der sphärischen Form in Strömungsrichtung dichtend an der Primäröffnung anliegend angeordnet sein. Bereits auf dem Weg der Membran zu ihrer dichtenden Anlage an den Primäröffnungen hin, kann eine Verminderung des strömungswirksamen Strömungsquerschnitts und damit eine Drosselung des Drucks und Erhöhung der Fließgeschwindigkeit erfolgen.

In einer vorteilhaften Weiterbildung des Füllventils kann die Membran zumindest in Strömungsrichtung lose bleibend an dem zumindest einem Distanzkörper anliegen.

Konstruktiv einfach können der zumindest eine Distanzkörper oder die mehreren Distanzkörper insgesamt eine ringartige, insbesondere kreisringartige, gegen Strömungsrichtung weisende Anlagefläche für die Membran bilden. Hierbei kann der zumindest eine Distanzkörper eine Ringform aufweisen. Diese kann zum Druckausgleich mit radialen Durchgangsöffnungen und/oder Schlitzen versehen sein.

Sind mehrere Distanzkörper vorgesehen, so können diese jeweils gleich oder sogar identisch aufgebaut sein. Sie können in einer Kreisform angeordnet sein. Insbesondere können sie bezüglich einer Mittelachse des Trägers auf einem Umfangkreis und vorzugsweise umfänglich gleich beabstandet zueinander angeordnet sind. Damit können sie in ihrer Gesamtheit eine über den Umfang unterbrochene Ringform und eine entsprechend unterbrochene Anlagefläche für die Membran bilden. In beiden Fällen kann die Ringform koaxial zu einer vorgesehenen Mittelachse der Volumenstromregelung angeordnet sein. Vorzugsweise fallen Mittelachse des Trägers und die der Volumenstromregelung zusammen.

Ferner kann die Membran so zu der Ringform angeordnet sein, dass sie sich, vorzugsweise permanent, an der Ringform mit einem radial äußeren umfänglichen Bereich abstützt und mit bei Einsetzen des Durchflusses von Flüssigkeit durch die Volumenstromregelung, vorzugsweise ab einem bestimmten Fließdruck, unter weiterer Abstützung an der Ringform beginnt, sich zu dem Träger, d.h. zu der ersten Öffnung hin vorzugsweise sphärisch zu wölben.

In einer vorteilhaften Weiterbildung des Füllventils kann die Anlagefläche, zur definierten Abstützung und leichteren Wölbung der anliegenden Membran, in Strömungsrichtung radial nach Innen abgeschrägt ausgebildet sein. Insbesondere kann die Anlagefläche mit einer Komponente radial nach Innen weisen. Die Anlagefläche kann eine Flächennormale mit einer gegen Strömungsrichtung weisenden Komponente aufweisen. Die Anlagefläche kann einen radial äußeren zweiten Abschnitt zur Abstützung der Membran im unbelasteten Zustand aufweisen, dessen Flächennormale gegen Strömungsrichtung weist. Die Anlagefläche ist vorzugsweise ungekrümmt ausgebildet. Die schräggestellter Anlagefläche erleichtert die Verformung der Membran in die gekrümmte räumliche Form hinein. Die schräggestellter Anlagefläche kann zugleich als Begrenzungsfläche dienen, die die gekrümmte räumliche Form der Membran von außen her definiert.

In einer vorteilhaft einfachen Weiterbildung des Füllventils können die Distanzkörper als sich von dem Träger gegen Strömungsrichtung weg erstreckende Vorsprünge ausgebildet sein. Diese können eine zylindrische Form aufweisen. Sie können mit der Anlagefläche die Form eines schräg abgeschnittenen Zylinders, insbesondere Kreiszylinders, aufweisen. Hierbei kann der oben beschriebene radial äußere zweite Abschnitt eine Restfläche der gegen Strömungsrichtung weisenden Stirnseite des Zylinders sein.

Insbesondere kann die Membran im Idealfall in der Dichtungsposition zu einem rotationssymmetrischen Körper gebogen ausgebildet sein.

In einer Weiterbildung des Füllventils können die Vorsprünge bezüglich einer Mittelachse auf einem Radius angeordnet sein. Es können die bezüglich der Mittelachse einander gegenüberliegenden Vorsprünge eine gleiche Höhe aufweisen. Hierzu können alle Vorsprünge eine gleiche Höhe aufweisen.

Es können aber auch umfänglich benachbarte Vorsprünge eine unterschiedliche Höhe und einander gegenüberliegenden Vorsprünge eine gleiche Höhe aufweisen. Sind hierbei beispielsweise insgesamt vier Vorsprünge vorgesehen, so verändert sich das Biegeverhalten der Membran gegenüber dem bei vier gleichen Vorsprüngen. Die Membran wird zunächst an den höheren Vorsprüngen bezüglich einer ersten radialen Biegeachse senkrecht zu einer die höheren Vorsprünge verbindenden Geraden etwa rinnenartig gebogen. Mit weiterer Erhöhung des Strömungsdrucks senkt sich die Membran auf die kleineren Vorsprünge ab, um an diesen zusätzlich um eine zweite Biegeachse, vorzugsweise senkrecht zur ersten Biegeachse räumlich gebogen zu werden. Hierbei kann davon ausgegangen werden, dass die Biegung um die erste Biegeachse leichter als die um die zweite Biegeachse ist. Mittels dieser Maßnahme mit den unterschiedlichen Höhen benachbarter Vorsprüngen kann eine stärkere Verspannung der Membran in der Dichtungsposition erzielt werden. Gemäß eigenen Versuchen kann durch die Maßnahme eine verbesserte Geräuschreduzierung erzielt werden.

Die Membran kann senkrecht zur Strömungsrichtung radial verschiebungsfest und vorzugsweise axial relativ bewegbar, insbesondere verschieblich, mittig mit dem Träger verbunden sein. Hierzu kann die Membran mittig eine Stecköffnung aufweisen, in die zur Ausbildung einer Steckverbindung ein an dem Träger mittig vorgesehener, sich gegen Strömungsrichtung erstreckender Steckvorsprung eingreift. Vorzugsweise ist die Steifigkeit der Membran so hoch, dass sie selbsttragend ist.

Es können in einer Weiterbildung des Füllventils zumindest zwei Primäröffnungen, vorzugsweise zumindest vier Primäröffnungen vorgesehen sein. Diese können bezüglich einer Mitte vorzugsweise auf einem ersten Radius und vorzugsweise umfänglich gleich beabstandet angeordnet sein. Die Mitte kann bezüglich der symmetrischen Anordnung der Primäröffnungen durch eine Drehsymmetrieachse parallel zur Strömungsrichtung gekennzeichnet sein. Die Primäröffnungen können gleiche Öffnungsquerschnitte aufweisen.

Zur Einstellung eines bestimmten Abstandes und damit der Kraft bzw. des Fließdrucks kann der Träger einen sich gegen Strömungsrichtung erstreckenden und radial außen zur Primäröffnung angeordneten Distanzkörper aufweisen, an dem die Membran in Strömungsrichtig vorzugsweise lose bleibend axial anliegt. Von der Statik günstig kann pro Primäröffnung mindestens ein Distanzkörper oder können pro Primäröffnung zwei Distanzkörper vorgesehen sein. Die Distanzkörper können in einem radial äußeren Bereich axial an der Membran angreifend angeordnet sein. Über die axiale Größe und/oder radiale Anordnung, d.h. Beabstandung von der Mittelachse der Distanzkörper sowie beispielsweise über die Flexibilität der Membran kann der Fließdruckbereich eingestellt werden. Dieser Fließdruckbereich kann eine untere Grenze, an der die Membran beginnt, von den Distanzkörpern gehalten sich in Strömungsrichtung gegen die Primäröffnungen durchzubiegen, und die obere Grenze aufweisen, an der die Membran die Primäröffnungen vollständig abdeckt.

Das Füllventil weißt als Teil der Volumenstromregelung mindestens eine Sekundäröffnung auf Diese ist permanent geöffnet ausgebildet. D.h. die Sekundäröffnung wird nicht wie die Primäröffnung überdeckt, sondern ist im Normalbetrieb freigehalten. Die Sekundäröffnung kann am Träger und hier vorzugsweise radial beabstandet zu den Primäröffnungen angeordnet sein. Es ist somit vorgesehen, dass ein Teil der Flüssigkeit praktisch als "Grundlast" die Volumenstromregelung solange durchströmt, wie der Fließdruck der Flüssigkeit an der Sekundäröffnung größer Null ist. Diese Grundlast bleibt auch dann erhalten, wenn die Primäröffnungen vollständig dichtend überdeckt sind. Somit kann auch bei höheren Fließdrücken ein nahezu linearer Volumenstromverlauf in Abhängigkeit von dem Fließdruck und somit zumindest ein nahezu konstanter Volumenstrom durch das Füllventil erfolgen. Der Volumenstrom kann beispielsweise 0,1 l/s betragen. Eine mögliche Schwankungsbreite des Volumenstromes kann weniger als +/-20% betragen. Die zumindest eine Sekundäröffnung und/oder die zumindest eine Primäröffnung sind jeweils von einer Innenwandung begrenzt, die zur Reduktion von Schallemission beim Durchfluss vorzugsweise gleichmäßig mit konstanter Rautiefe aufgeraut ausgebildet ist. Durch diese Maßnahme konnte bei dem Durchflussregler eine starke Reduzierung der Schallemission erzielt werden. Ursache hierfür kann sein, dass die aufgeraute Oberfläche eine Erhöhung der Mikroturbulenzen zu der Innenwandung der Sekundäröffnungen bewirken. Ebenfalls zur Reduktion der Schallemission können zumindest die in Strömungsrichtung unmittelbar an die Öffnungen anschließenden Flächen des Trägers mit der aufgerauten Oberfläche versehen sein.

Die Aufrauhung kann eine Oberflächenstruktur in Form von Querrillen quer zur Strömungsrichtung aufweisen. Bevorzugt wegen erhöhter Geräuschminderung ist eine Struktur mit Längsrillen. Die aufgeraute Oberfläche kann auch eine isotrope Struktur aufweisen. Die Aufrauhung der Oberfläche kann beispielsweise durch Bürstung derselben hergestellt sein.

Anstatt oder zusätzlich zu der Aufrauhung können die Oberflächen gedimpelt ausgebildet sein. Sie können somit von einer Vielzahl vorzugsweise gleich beabstandeten Dimples überzogen sein. Die Dimples können ähnlich wie bei einem üblichen Golfball ausgebildet sein. Sie können als kleine flache Mulden mit kugelkalottenartigem Innenraum ausgebildet sein. Durch die gedimpelte Oberfläche kann die Zone der laminaren und damit geräuschsarmen Strömung der Flüssigkeit zu der Wandung hin vergrößert werden.

Es können mindestens zwei Sekundäröffnungen, vorzugsweise mindestens acht Sekundäröffnungen vorgesehen sein. Die Sekundäröffnungen können bezüglich einer Mittelachse parallel zur Strömungsrichtung vorzugsweise auf einem zweiten Radius und vorzugsweise umfänglich gleich beabstandet voneinander angeordnet sein. Die Sekundäröffnungen können gleiche Öffnungsquerschnitte aufweisen. Durch diese permanent geöffnete Sekundäröffnung kann sichergestellt werden, dass auch bei hohen Fließdrücken, die einen zum Überdecken und damit Verschließen der Primäröffnungen notwendigen Fließdruck überschreiten, eine gleichmäßige Befüllung des Wasserkasten erfolgen kann. Die symmetrische Anordnung der Sekundäröffnung begünstigt ein laminares Strömungsverhalten des Volumenstromes, welches wiederum zur Geräuschminimierung beiträgt.

Vorzugsweise ist der Träger zur Mittelachse als Drehsymmetrieachse rotationssymmetrisch ausgebildet. Die Primäröffnungen können radial innen zu den Sekundäröffnungen angeordnet sein. Es kann der erste Radius kleiner als der zweite Radius sein. Vorzugsweise sind die Sekundäröffnungen radial außen an dem Träger angeordnet. Der zweite Radius kann gleich dem Außenradius des Trägers sein. Damit kann die Flüssigkeit nahe oder unmittelbar an einer Innenwandung des Zulaufs und/oder Ablaufs entlang durch die Sekundäröffnungen strömen. Damit kann ein laminares Fließverhalten der Flüssigkeit an der Innenwandung erzielt werden, welches wiederum zur Geräuschminimierung beiträgt.

Die Distanzstücke können auf einem dritten Radius angeordnet sein. Der dritte Radius kann größer als der erste Radius und kleiner als der zweite Radius sein.

Die oben beschriebene "Grundlast" kann beispielsweise über die Anzahl der Sekundäröffnungen und deren Öffnungsquerschnitten voreingestellt werden. Bei einer Ausbildungsform des Füllventils kann die Summe der Öffnungsquerschnitte der Primäröffnungen größer als die Summe der Öffnungsquerschnitte der Sekundäröffnungen sein. Der Strömungsquerschnitt der Sekundäröffnung bzw. aller Sekundäröffnungen kann weniger als 40%, vorzugsweise weniger als 20% oder idealerweise um 10% als der Strömungsquerschnitt der Primäröffnung bzw. aller Primäröffnungen betragen. Vorzugsweise ist der Öffnungsquerschnitt jeder einzelnen Primäröffnung größer als der Öffnungsquerschnitt jeder einzelnen Sekundäröffnung.

Es kann auch mindestens eine Tertiäröffnung vorgesehen sein, deren Öffnungsquerschnitt kleiner als der jeder der Primäröffnungen und größer als der jeder der Sekundäröffnungen ist. Diese können unabhängig von der Überdeckung der Primäröffnungen vorzugsweise dichtend überdeckbar sein. Die Überdeckung der Tertiäröffnungen kann somit so ausgelegt sein, dass vor Vollendung oder nach der Überdeckung der Primäröffnungen begonnen wird, die Tertiäröffnungen zu überdecken. Damit kann die Konstanz des Volumenstromes in Abhängigkeit vom Fließdruck der Flüssigkeit weiter verbessert und somit die Geräuschentwicklung insgesamt weiter minimiert werden.

Somit kann der Anteil des Flüssigkeitsstromes durch die geöffneten Primäröffnungen größer als der durch die Sekundäröffnungen sein. Damit wird ein anfänglicher hoher Volumenstrom sichergestellt.

Bei einer üblichen Drosselvorrichtung steigt der Volumenstrom oder Durchfluss nicht linear kontinuierlich an. Die Volumenstromregelung bei dem erfindungsgemäßen Füllventil kann zusammenfassend darauf fußen, dass der Durchfluss, im Vergleich zu einer üblichen Drosselvorrichtung, in einem unteren Druckbereich durch die Drosselvorrichtung höher ist, aber dass, sobald der Druck erhöht wird, durch die fortschreitende Überdeckung der Primäröffnungen kontinuierlich herab geregelt wird. Sind Sekundäröffnungen vorgesehen, so erfolgt der Durchfluss nach Überdeckung der Primäröffnungen allein durch die Sekundäröffnungen. Ist die Summe der Eröffnungsquerschnitte der Sekundäröffnungen wesentlich kleiner als die der Primäröffnungen, so kann in erster Näherung davon ausgegangen werden, dass der Durchfluss, da er durch die Sekundäröffnungen klein ist und sich somit mit weiterer Erhöhung des Drucks nur gering erhöht, bei Druckerhöhung im Wesentlichen konstant bleibt.

Über die Größe der Membran kann eingestellt werden, ob alle bzw. welche der Primäröffnungen in der Schließposition überdeckt werden. Es können auch Primäröffnungen unüberdeckt bleiben, die dann als Sekundäröffnungen fungieren.

Die Primäröffnungen können alternativ rasterförmig angeordnet oder als Maschen eines Siebes ausgebildet sein. Kraftmechanisch und strömungstechnisch günstig kann der Träger bezüglich einer Drehsymmetrieachse parallel zur Strömungsrichtung einen achsensymmetrischen Aufbau aufweisen. Die Drehsymmetrieachse kann gleich der Mittelachse des Trägers sein. Somit können die ersten und, soweit vorhanden, auch die Sekundäröffnungen über Drehung an der Drehsymmetrieachse in Deckung gebracht werden. Diese Symmetrieform wird auch Radiärsymmetrie genannt.

Die vorliegende Erfindung wird im Folgenden anhand mehrerer in einer Zeichnung dargestellten Ausführungsformen der Führung näher erläutert. In der Zeichnung zeigen:
- Fig. 1: eine Seitenansicht mit Teilschnitten einer Ausführungsform eines Füllventils mit Drosselvorrichtung und Durchflussregler,
- Fig. 2: eine Detailvergrößerung gemäß dem Ausschnitt II mit einer ersten Ausführungsform des Durchflussreglers,
- Fig. 3: eine Draufsicht auf den Durchflussregler gemäß Figur 2 in einer Einzeldarstellung, Die Figuren 2 und 3 zeigen keine Ausführungsbeispiele, die im Schutzumfang der Ansprüche fallen.
- Fig. 4: eine Detailvergrößerung etwa gemäß dem Ausschnitt II mit einer Ausführungsform des Durchflussreglers gemäß der Erfindung,
- Fig. 5: eine Draufsicht auf den Durchflussregler gemäß Figur 4 in einer Einzeldarstellung,
- Figuren 6 und 7: jeweils eine perspektivische Einzeldarstellung eines Trägers einer weiteren Ausführungsform des Durchflussreglers ohne bzw. mit unverformter Membran,
- Fig. 6a: eine Detailvergrößerung aus Figur 6,
- Figuren 8-10: jeweils eine weitere Ansicht des Trägers gemäß Figur 7 mit Membran und
- Figuren 10-14: jeweils eine Ansicht des Trägers einer weiteren Ausführungsform des Durchflussreglers, jedoch mit verformten Membran.

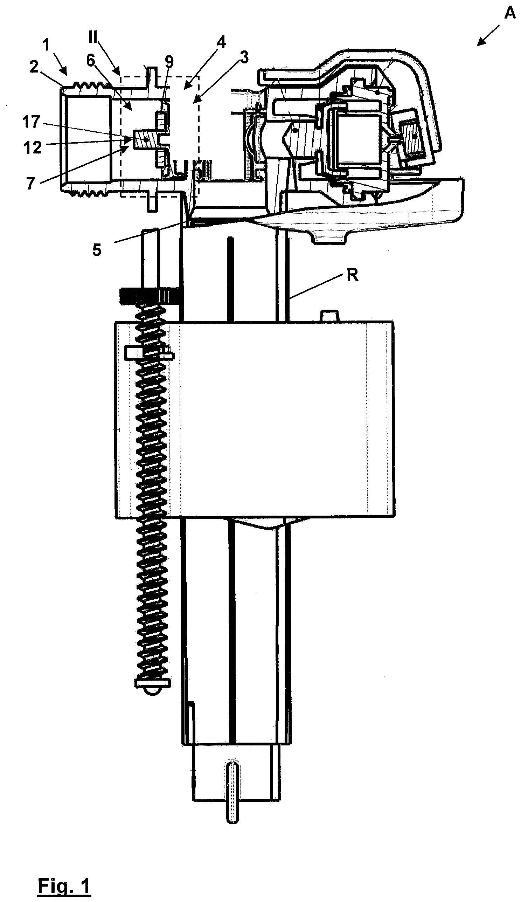

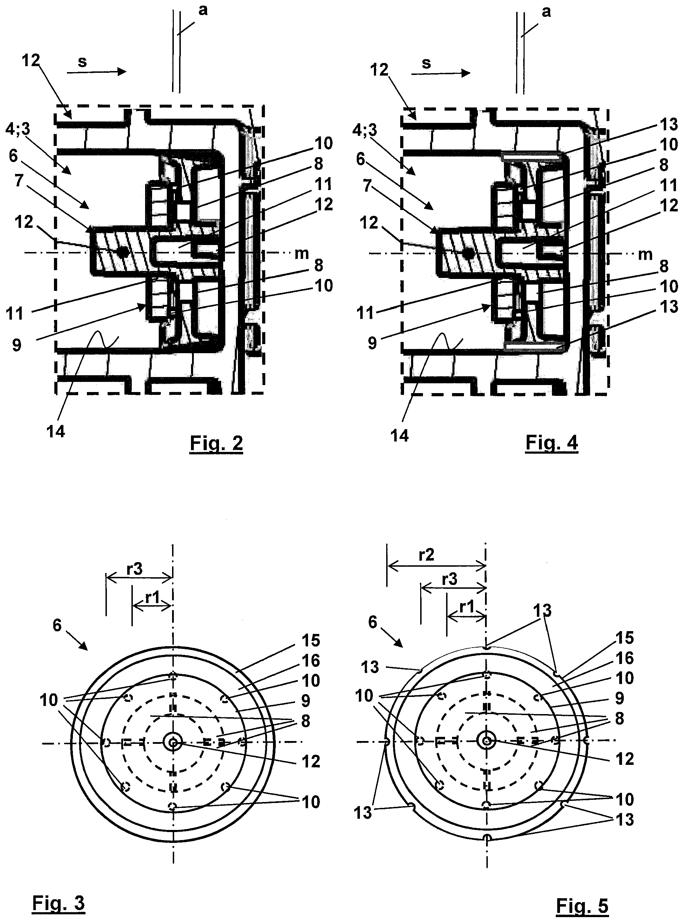

In Figur 1 wird in einer Seitenansicht mit Detailschnitten eine Ablaufgarnitur A mit Füllventil 1 und Ablaufrohr R zum Einbau in einen hier nicht dargestellten Spülkasten, der mittels der Ablaufgarnitur A mit Flüssigkeit, hier mit Wasser, befüllbar ist, dargestellt. Das Füllventil 1 weist einen Zulauf 2 mit einer einen Durchflussregler 3 aufweisenden Drosselvorrichtung 4 zur Druckverminderung der in Strömungsrichtung s einströmenden Flüssigkeit sowie einen Ablauf 5 auf. Die Figuren 2 und 4 zeigen jeweils eine Detailvergrößerung gemäß dem Ausschnitt II in Figur 1 mit einer ersten Ausführungsform bzw. einer zweiten Ausführungsform des Füllventils 1. Eine jeweils zugehörige Draufsicht auf den Durchflussregler 3 ist in den Figuren 3 und 5 wiedergegeben.

Der Durchflussregler 3 ist erfindungsgemäß als Volumenstromregelung 6 ausgebildet und ermöglicht eine Volumenstromkonstanz der Flüssigkeit in Abhängigkeit von dem Fließdruck der Flüssigkeit an dem Zulauf 2. Hierbei sind in den Figuren 2 und 3 eine erste Ausführungsform und in den Figuren 4 und 5 eine zweite Ausführungsform der Volumenstromregelung 6 dargestellt.

Die Volumenstromregelung 6 ist in dem Zulauf 2 angeordnet. Dieser hat einen kreisförmigen Querschnitt. Die Volumenstromregelung 6 weist einen sich über den Strömungsquerschnitt des Zulaufs 2 erstreckenden Träger 7 auf. Der Träger 7 weist in den hier gezeigten beiden Ausführungsformen des Durchflussreglers 3 vier Primäröffnungen 8 auf, die in Abhängigkeit des Fließdrucks der Flüssigkeit am Zulauf 2 mit Erhöhung desselben fortschreitend dichtend überdeckbar bzw. mit Erniedrigung desselben fortschreitend freigebbar angeordnet sind. Damit kann mit Erhöhung des Fließdrucks der Flüssigkeit ein strömungswirksamer Strömungsquerschnitt an den Primäröffnungen 8 kontinuierlich verringert werden, bis er mit dichtender Überdeckung der Primäröffnungen 8 gleich Null wird.

Der Träger 7 ist bezüglich einer mittigen Drehsymmetrieachse d parallel zur Strömungsrichtung s rotationssymmetrisch ausgebildet. Die Drehsymmetrieachse d ist gleich einer Mittelachse m. Die Primäröffnungen 8 sind bezüglich der Mittelachse m der Volumenstromregelung 6 auf einem ersten Radius r1 und umfänglich gleich beanstandet angeordnet. Sie weisen jeweils einen gleichen Öffnungsquerschnitt auf und sind, entsprechend der Rotationssymmetrie durch Drehung an der Drehsymmetrieachse deckungsgleich übereinander bringbar. Zur Überdeckung der Primäröffnung 8 ist eine Membran 9 vorgesehen, die in Strömungsrichtung s vor den Primäröffnungen 8 angeordnet ist. Die Membran 9 ist in einer in den Figuren gezeigten Offenposition der Volumenstromregelung 6, in der der Fließdruck gleich Null ist, in einem zur Strömungsrichtung s axialen Abstand a gehalten angeordnet. In einer hier nicht dargestellten aber leicht aus den Figuren ableitbaren Schließposition der Volumenstromregelung 6 liegt die Membran 9 dichtend an den Primäröffnungen 8 an. Zur Beabstandung der Membran 9 sind Distanzkörper, hier in Form von Vorsprüngen 10 vorgesehen, die sich gegen Strömungsrichtung s vom Träger 7 weg erstrecken und radial außen zu den Primäröffnungen 8 angeordnet sind. Die Membran 9 liegt in Strömungsrichtung axial an den Vorsprüngen 10 an. Zur sicheren Halterung sind radial außen pro Primäröffnung 8 zwei Vorsprünge 10 vorgesehen.

Die Membran 9 ist in beiden Ausführungsformen der Volumenstromregelung 6 als ringförmige Kreisscheibe mit mittiger Stecköffnung 11 ausgebildet, die, senkrecht zur Strömungsrichtung s axial verschieblich und unter elastischer Aufweitung an ihrer Stecköffnung 11 in Strömungsrichtung s auf einen sich vom Träger 7 weg erstreckenden Steckvorsprung 12 aufgeschoben, festgelegt ist. Die Membran 9 weist eine Steifigkeit auf, die hoch genug ist, selbsttragend zu sein, und gering genug ist, um die geforderte Flexibilität zum Verbiegen der Membran 9 zu den Primäröffnungen 8 hin und Verdecken derselben zu gewährleisten.

In der Ausführungsform gemäß den Figuren 4 und 5 sind bei der Volumenstromregelung 6 zusätzlich Sekundäröffnungen 13 vorgesehen. Diese sind permanent geöffnet und somit nicht von der Membran 8 überdeckt. Sie sind schlitzartig radial nach innen in den Träger 7 eingebracht und weisen eine kreissegmentartige Form auf. Die Sekundäröffnungen 13 sind jeweils in Strömungsrichtung geteilt, indem die Innenwandung 14 der Sekundäröffnungen 13 radial außen von dem Zulaufs 2 und radial innen von dem Träger 7 gebildet, wobei der Träger 7 radial außen formschlüssig an dem Zulauf 2 anliegt.

Die Sekundäröffnungen 13 sind auf einem Umfangskreis mit einem zweiten Radius r2 angeordnet, der größer als der Umfangkreis mit erstem Radius r1 ist. Die Vorsprünge 10 sind ihrerseits auf einem Umfangskreis mit einem dritten Radius r3 angeordnet, der größer als der erste Radius r1 und kleiner als der zweite Radius r2 ist.

Ferner ist die Summe der Eröffnungsquerschnitte der Primäröffnungen 8 größer als die Summe der Eröffnungsquerschnitte der Sekundäröffnungen 13. Dies heißt, in der Offenposition strömt der Hauptanteil der einströmenden Flüssigkeit durch die Primäröffnungen 8. Der Anteil an strömender Flüssigkeit durch die Sekundäröffnungen 13 ist somit kleiner als der durch die Primäröffnungen 8. Sind die Primäröffnungen 8 geschlossen, so strömt weiterhin Flüssigkeit durch die Sekundäröffnungen 13.

Wie den Figuren 1, 2 und 4 entnehmbar, ist der Träger 7 seinerseits in Strömungsrichtung s unter Ausbildung einer Steckverbindung auf einen axial mittigen in eine Stecköffnung 11 am Träger eingreifenden Steckvorsprung 12 des Füllventils 1 radial verschiebungsfestaufsteckbar. Er kann somit zusammen mit der Membran 9 gegen Strömungsrichtung s von dem Steckvorsprung 12 abgezogen und eventuell gereinigt und/oder ausgetauscht werden.

Der Träger 8 weist eine napfartige Form mit einem umlaufenden Rand 15 und einer Vertiefung 16 auf, wobei die Sekundäröffnung 13 in den Rand 15 eingearbeitet ist und die Membran 9 geschützt in der Vertiefung 16 angeordnet ist. Der sich gegen Strömungsrichtung s erstreckende Steckvorsprung 12 des Trägers 7 durchragt die Stecköffnung 13 der ringartigen Membran 9 mit einem freien Ende 17, durch das der Träger 7 mit Membran 9 unter Eingriff in den Zulauf 2 ergriffen, herausgezogen und ausgetauscht werden kann.

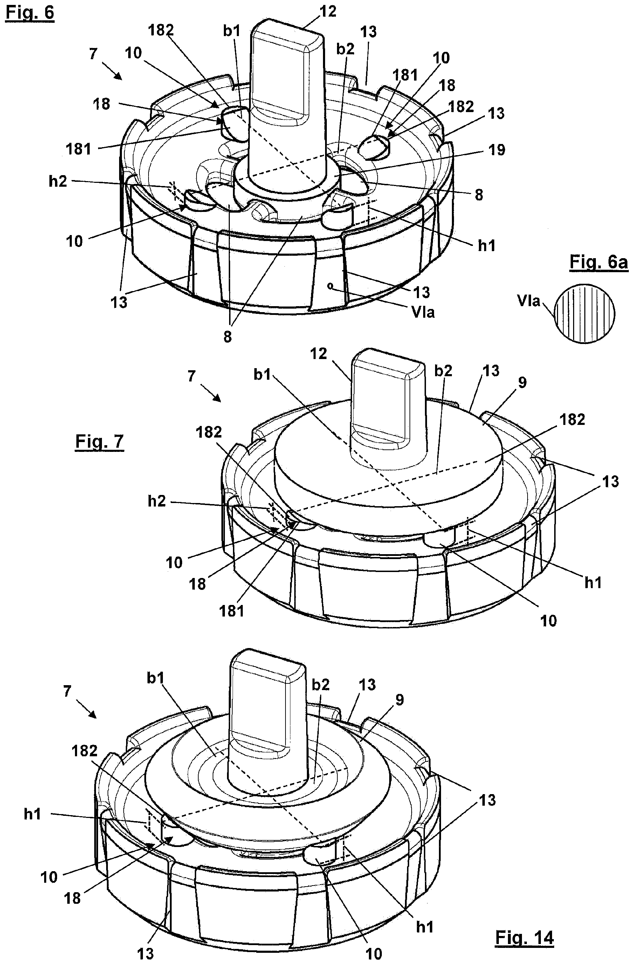

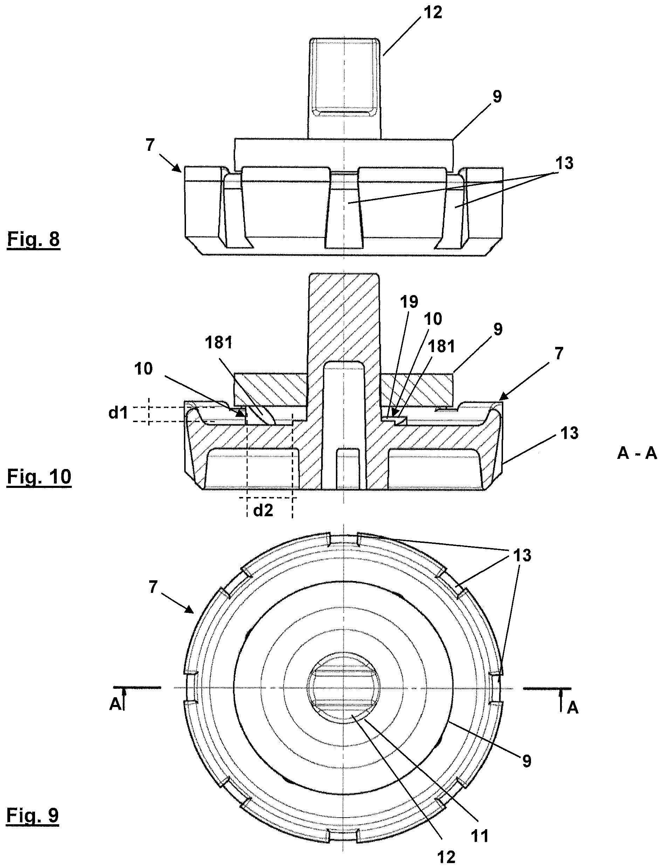

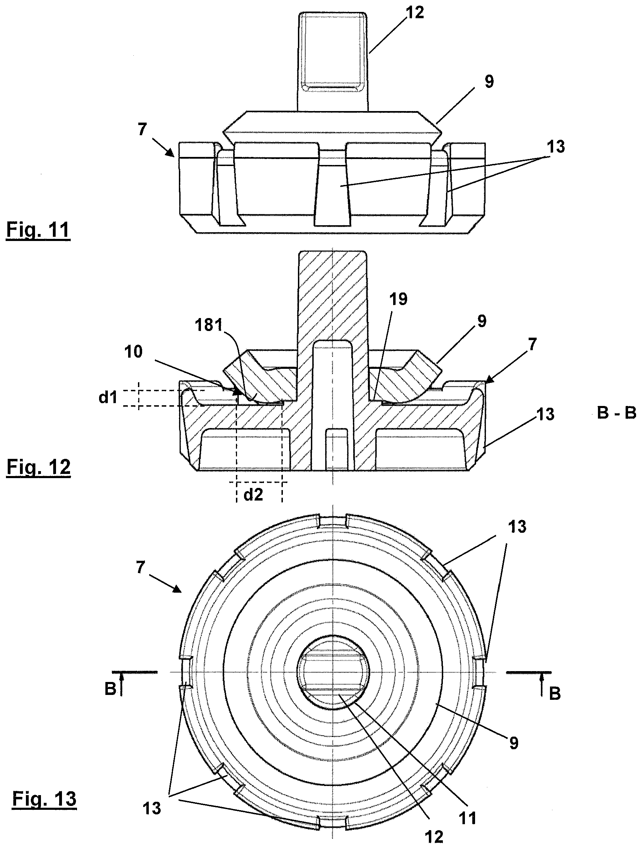

In den Figuren 8-14 werden verschiedenen Ansichten des Trägers 7 mit und ohne Membran 9 zweier unterschiedlicher Ausführungsformen des Füllventils 1 gezeigt. Hierbei kann die Membran 9 an den Vorsprüngen 10 aus der in Figuren 7-9 gezeigten Offenposition in die in Figur 11-14 gezeigte Dichtungsposition unter Ausbildung einer definierten gekrümmten Form, hier sphärischen Form, verformt werden. Diese Ausführungsformen unterscheiden sich von den vorherigen konstruktiv insbesondere durch die Anordnung und Ausbildung der Distanzkörper und der Membran 9, wodurch eine Verformung der Membran 9 aus der Offenposition in die Dichtungsposition hinein in eine definierte gekrümmte Form ermöglicht wird.

Es sind hier vier umfänglich gleich beabstandete Vorsprünge 10 vorgesehen. Radial einander gegenüberliegende Vorsprünge 10 weisen hierbei jeweils eine gleiche Höhe h1, h2 auf. Sie sind hier kreiszylinderförmig ausgebildet. Die Membran 9 liegt in Strömungsrichtung s lose bleibend an den Vorsprüngen an. Ferner ist sie über ihre Stecköffnung 11 mit Spiel axial gleitverschieblich an dem Steckvorsprung 12 gelagert. Die Membran 9 ist ungekrümmt als Kreisscheibe ausgebildet. Ferner ist sie aus Butadien-Kautschuk gefertigt.

Die Vorsprünge bilden in ihrer Gesamtheit endseitig eine hier kreisringartige, gegen Strömungsrichtung e weisende Anlagefläche, die hier über die umfängliche Beabstandung der Vorsprünge 10 in einzelne Anlageflächen 18 unterbrochen ist, für die Membran 8 bilden. Hierbei ist die Anlagefläche 18, d.h. genauer hier ein erster Abschnitt 181 der Anlagefläche 18 in Strömungsrichtung s radial nach Innen abgeschrägt angeordnet. An diesem ersten Abschnitt 181 der Anlagefläche 18 liegt die Membran 8 in der Dichtungsposition flächig an. Somit definieren die Anlageflächen 18 der Vorsprünge 10 die gekrümmte Form der Membran 9 in der Dichtungsposition (Figur 14). In den in den Figuren 6-14 dargestellten Ausführungsformen des Trägers 7 weist die Anlagefläche 18 der einzelnen Vorsprünge 10 radial außen einen hier genau gegen Strömungsrichtung s weisenden kreissegmentartigen zweiten Abschnitt 182 auf, an dem die Membran 9 in der Offenposition anliegt (siehe Figur 7). Damit weisen die Vorsprünge 10 endseitig jeweils eine keilartige Form mit einem Keilwinkel auf, in dem sich die keilartige Form gegen Strömungsrichtung s und radial nach außen verjüngt. Die Anstellung des ersten Abschnitts 181 der Anlagefläche 18 bestimmt ebenfalls die gekrümmte Form der Membran 9. Der Keilwinkel beträgt hier etwa 60°.

Kragartig vorspringen ist umfänglich um den Steckvorsprung eine gegen Strömungsrichtung s weisende Abstützfläche 19 vorgesehen, an die sich die Membran 9 auf dem Weg in ihre Dichtungsposition mit einem Öffnungsrandbereich ihrer Stecköffnung 11 anlegt. Diese Abstützfläche 19 bestimmt die Ausbildung des Zenits der sphärischen Form der Membran 9 in der Dichtungsposition.

Ferner ist der zweite Abschnitt 182 der Anlagefläche 18 in einer bestimmten axialen ersten Distanz d1 angeordnet. Je größer die erste Distanz ist, desto stärker ist die Membran 9 in der Dichtungsposition gekrümmt. Ferner ist der erste Abschnitt 181 der Anlagefläche 18 in einer zweiten Distanz d2 zu der Abstützfläche 19 angeordnet, an der die Membran 9 in der Dichtungsposition flach anliegt. Rein aus der Anschauung heraus kann aus den Figuren abgelesen werden, dass diese zweite Distanz d2 insbesondere die Ausbildung der radialen Mitte der Membran 9 mit bestimmt. Je weiter dieser Abstand und je weiter die Abstützfläche 19 zu der radialen Mitte der Membran 9 heranreicht, desto eher neigt die Membran 9 dazu, in der Dichtungsposition ein W-Profil auszubilden, das die Membran 9 weiter stabilisieren kann.

Infolge der radial paarigen Anordnung der Vorsprünge 10 bilden sich mit dem mittigen Absenken der Membran 9 in die Dichtungsposition hinein zwei senkrecht zueinander stehende Biegeachsen b1, b2 (siehe Figuren 6 und 7), um die die Membran 9 gebogen wird. In der unter anderem in Figur 14 gezeigten Ausführungsform des Trägers 7 wiesen alle vier Vorsprünge 10 eine gleiche Höhe auf. Folglich wird die Membran 9 mit Absenken ihrer Mitte um beide Biegeachsen bezüglich von Zylinderkoordinaten gleich gebogen und weist daher in der Dichtungsposition eine relativ regelmäßige achsensymmetrische Form auf, die in etwa der oben beschriebenen sphärischen Hohlkugelkalotte entspricht. In Abweichung von ihrer theoretischen Form weist die Hohlkugelkalotte in ihrem Zenit eine Abflachung 91 auf.

Diese biegt sich hier sogar infolge weiterer Wölbung der Membran 9 radial zwischen dem Vorsprung 10 und der Abstützfläche 19 in Strömungsrichtung s über die Abstützfläche 19 zur Abdichtung der Primäröffnungen 8 wulstartig unter Ausbildung eines leichten W-Profils hinaus. Dies verursacht eine weitere Verspannung der Membran 9, wodurch die Membran 9 noch stabiler gegenüber einer Anregung zur Vibration wird.

Weisen jedoch, wie in Figuren 6-10 gezeigt, radial einander gegenüberliegende Vorsprünge 10 eine gleiche erste Höhe h1 bzw. eine gleich zweite Höhe h2 und umfänglich benachbarte Vorsprünge 10 eine unterschiedlich Höhen h1, h2 auf, so ändert sich das Biegeverhalten um die beiden Biegeachsen b1,b2. Es erfolgt mit mittigem Auswölben der Membran 9 und ihrer Anlage an die Vorsprünge 10 mit der größeren ersten Höhe h1 zuerst eine Biegung um die erste Biegeachse b1, wodurch sich die Membran 9 rinnenartig verformt und damit bereits eine im Effekt eine vibrationsvermindernde und damit geräuschvermindernde Formverspannung aufweist. Mit Anlage an die beiden Vorsprünge 10 mit der geringeren zweiten Höhe h2 kommt als zweite Biegung die um die zweite Biegeachse b2 senkrecht zu ersten Biegeachse b1 hinzu, wodurch die Membran sich sphärenartig verformend eine zusätzliche Formverspannung erfährt, wodurch die Membran 9 noch schwerer in Schwingungen geraten kann. Hieraus wird deutlich, dass die unterschiedlichen Höhen h1, h2 der Vorsprünge 10 zu einer verstärkten Formverspannung der Membran 9 führen. Hieraus kann zumindest innerhalb eines bestimmten Bereichs abgeleitet werden, dass je größer die Höhendifferenz der benachbarten Vorsprünge 10 ist, desto höher ist die entstehende Formverspannung und damit die hieraus resultierende Geräuschverminderung.

Somit können über die oben erläuterten konstruktiven Maßnahmen gezielt die räumliche Form der Membran 9 und damit die Minderung der Geräusche beim Durchfluss von Flüssigkeit durch den Durchflussregler eingestellt werde.

Die in den Figuren gezeigten Ausführungsformen des Füllventils 1 zeichnen sich auch dadurch aus, dass die Innenwandung 14 der Sekundäröffnungen 13 zur Reduktion von Schallemission beim Durchfluss von Flüssigkeit aufgeraut ausgebildet ist. Dies ist in den vorschriftsmäßig als Linienzeichnung ausgelegten Zeichnungsfiguren nicht explizit entnehmbar. Eine rein schematisch dargestellte Detailvergrößerung in Figur 6a soll diese Aufrauhung verdeutlichen. Die Aufrauhung ist hier durch eine in Strömungsrichtung s erfolgte Bürstung in die Innenwandung 14 eingebracht. Gleiches gilt für die Innenwandung 14 der Primäröffnungen 8 sowie für die Wandung des Trägers 7 und des Zulaufs 2, soweit sie von der Flüssigkeit angeströmt werden. Hierbei ist insbesondere die in Strömungsrichtung s an die Innenwandung 14 der Primaröffnung 8 und der Sekundäröffnung 13 anschließende Wandung des Zulaufs 2 und des Trägers 7 aufgeraut ausgebildet.

### Bezugszeichenliste

- 1: Füllventil
- 2: Zulauf
- 3: Durchflussregler
- 4: Drosselvorrichtung
- 5: Ablauf
- 6: Volumenstromregelung
- 7: Träger
- 8: Primäröffnung
- 9: Membran
- 91: Wulst
- 10: Vorsprung
- 11: Stecköffnung
- 12: Steckvorsprung
- 13: Sekundäröffnung
- 14: Innenwandung
- 15: Rand
- 16: Vertiefung
- 17: Ende
- 18: Anlagefläche
- 181: erster Abschnitt
- 182: zweiter Abschnitt
- 19: Abstützfläche
- a: Abstand
- d1: erste Distanz
- d2: zweite Distanz
- d: Drehsymmetrieachse
- m: Mittelachse
- b1: erste Biegeachse
- b2: zweite Biegeachse
- h1: erste Höhe
- h2: zweite Höhe
- r1: erster Radius
- r2: zweiter Radius
- r3: dritter Radius
- s: Strömungsrichtung
- A: Füllarmatur
- R: Ablaufrohr

## Patentansprüche

1. Füllventil zum Befüllen eines Spülkastens mit einer Flüssigkeit, insbesondere mit Wasser, wobei das Füllventil (1) einen Zulauf (2) mit einer Drosselvorrichtung (4) aufweist, die einen Durchflussregler (3) zur Druckverminderung der in Strömungsrichtung (s) einströmenden Flüssigkeit aufweist, der als Volumenstromregelung (6) zum Erhalt einer Volumenstromkonstanz der Flüssigkeit in Abhängigkeit von dem Fließdruck der Flüssigkeit am Zulauf (2) ausgebildet ist, um Strömungsgeräusche beim Befüllen des Spülkastens zu reduzieren, wobei die Volumenstromregelung (6) einen sich über den Strömungsquerschnitt des Zulaufs (2) erstreckenden Träger (7) mit zumindest einer Primäröffnung (8) aufweist, die mittels einer vorgeschalteten Membran (9) mit Erhöhung des Fließdruckes fortschreitend dichtend überdeckbar bzw. mit Erniedrigung derselben fortschreitend freigebbar angeordnet ist, **dadurch gekennzeichnet, dass** die Volumenstromregelung (6) mindestens eine Sekundäröffnung (13) aufweist, die permanent geöffnet ausgebildet ist, wodurch gewährleistet ist, dass ein Teil der Flüssigkeit die Volumenstromregelung (6) auch im Falle einer vollständig abdichtenden Überdeckung der zumindest einen Primäröffnung (8) so lange durchströmt, wie der Fließdruck der Flüssigkeit an der zumindest einen Sekundäröffnung (13) größer Null ist, wobei die zumindest eine Sekundäröffnung (13) von einer Innenwandung (14) begrenzt wird, die zur Reduktion von Schallemission beim Durchfluss aufgeraut und/oder gedimpelt ausgebildet ist.

2. Füllventil nach Anspruch 1, **dadurch gekennzeichnet, dass** die Membran (9) in ihrer Grundform flach ausgebildet ist und dass sie so in der Volumenstromregelung angeordnet ist, dass sie mit Erhöhung des Fließdruckes in eine definierte gekrümmte räumliche Form bringbar ist.

3. Füllventil nach Anspruch 2, **dadurch gekennzeichnet, dass** die gekrümmte räumliche Form der Membran (9) etwa die einer im Zenit abgeflachten Hohlellipsoidkalotte ist.

4. Füllventil nach Anspruch 2 oder 3, **dadurch gekennzeichnet, dass** die Membran (9) in einer Offenposition der Volumenstromregelung (6), in der der Fließdruck gleich oder etwa gleich Null ist, mittels zumindest eines Distanzkörper in einem zur Strömungsrichtung (s) axialen Abstand (a) zu der Primäröffnung (8) gehalten angeordnet ist und mit Erhöhung des Fließdruckes unter Ausbildung der gekrümmten räumliche Form, insbesondere einer im Zenit abgeflachten sphärischen Form, in eine Schließposition der Volumenstromregelung (6) hinein zur Strömungsrichtung (s) dichtend an der Primäröffnung (8) anliegt.

5. Füllventil nach Anspruch 4, **dadurch gekennzeichnet, dass** die Membran (9) in Strömungsrichtung (s) lose bleibend an dem zumindest einen Distanzkörper anliegt.

6. Füllventil nach Anspruch 4 oder 5, **dadurch gekennzeichnet, dass** der zumindest eine Distanzkörper oder mehrere Distanzkörper insgesamt eine ringartige, insbesondere kreisringartige, gegen Strömungsrichtung (s) weisende Anlagefläche (18) für die Membran (9) bilden.

7. Füllventil nach Anspruch 6, **dadurch gekennzeichnet, dass** zumindest ein radial innen liegender erster Abschnitt (181) der Anlagefläche (18) in Strömungsrichtung (s) radial nach Innen abgeschrägt ausgebildet ist.

8. Füllventil nach einem der Ansprüche 4 bis 7,
**dadurch gekennzeichnet, dass** die Distanzkörper als sich von dem Träger (7) gegen Strömungsrichtung (s) weg erstreckende Vorsprünge (10) ausgebildet sind, wobei die bezüglich einer Mittelachse (m) gegenüberliegenden Vorsprünge (10) eine gleiche Höhe (h1,h2) aufweisen.

9. Füllventil nach einem der vorangehenden Ansprüche,
**dadurch gekennzeichnet, dass** die Membran (9) unbelastet als Scheibe, insbesondere als Kreisscheibe ausgebildet ist, die senkrecht zur Strömungsrichtung (s) mittig axial mit dem Träger (7) radial verschiebungsfest verbunden ist.

10. Füllventil nach Anspruch 9, **dadurch gekennzeichnet, dass** die Membran (9) mittig eine Stecköffnung (13) aufweist, in die zur Ausbildung einer Steckverbindung ein an dem Träger (7) mittig vorgesehener, sich gegen Strömungsrichtung (s) erstreckender Steckvorsprung (12) eingreift.

11. Füllventil nach einem der vorangehenden Ansprüche,
**dadurch gekennzeichnet, dass** zumindest zwei Primäröffnungen (8), vorzugsweise zumindest vier Primäröffnungen (8) vorgesehen sind, die bezüglich einer mittigen Drehsymmetrieachse (d) auf einem ersten Radius (r1) und umfänglich gleich beabstandet angeordnet sind.

12. Füllventil nach einem der vorangehenden Ansprüche,
**dadurch gekennzeichnet, dass** zumindest die Innenwandung des Trägers (s), insbesondere die in Strömungsrichtung (s) (s) hinter den Primäröffnungen angeordnete Innenwandung des Trägers (7) aufgeraut ausgebildet sind.

13. Füllventil nach einem der vorangehenden Ansprüche,
**dadurch gekennzeichnet, dass** mindestens zwei Sekundäröffnungen (13), vorzugsweise mindestens acht Sekundäröffnungen (13) vorgesehen sind, die bezüglich der Mittelachse (m) parallel zur Strömungsrichtung (s) vorzugsweise auf einem zweiten Radius (r2) und vorzugsweise umfänglich gleich beabstandet angeordnet sind.

14. Füllventil nach einem der vorangehenden Ansprüche,
**dadurch gekennzeichnet, dass** die Summe der Öffnungsquerschnitte der Primäröffnungen (8) größer als die Summe der Öffnungsquerschnitte der Sekundäröffnungen (13) ist.

## Claims

1. Fill valve for filling a flush tank with a fluid, in particular with water, wherein the fill valve (1) has an inflow (2) with a throttling device (4) that has a flow regulator (3) for pressure reduction of the in flow direction (s) inflowing fluid that is designed as a volume flow control (6) for maintaining a volume flow constancy of the fluid depending on the flow pressure of the fluid at the inflow (2) in order to reduce flow noise when filling the flush tank, wherein the volume flow control (6) has a carrier (7) extending over the flow section of the inflow (2) and having at least one primary opening (8) that is placed progressively sealingly coverable by means of an upstream membrane (9) with an increased flow pressure or that is progressively uncoverable with a reduced flow pressure, **characterized in that** the volume flow control (6) has at least one secondary opening (13) that is designed permanently opened so that it is ensured that a part of the fluid flows through the volume flow control (6) even in case of a complete sealing covering of the at least one primary opening (8) as long as the flow pressure of the fluid at the at least one secondary opening (13) is greater than zero, wherein the at least one secondary opening (13) is limited by an inner wall (14) that is designed roughened and/or dimpled for reducing the noise emission when the fluid flows through.

2. Fill valve according to claim 1, **characterized in that** the membrane (9) is designed flat in its basic shape and that it is placed in the volume flow control in such a manner that, when the flow pressure increases, it can be brought in a defined curved spatial shape.

3. Fill valve according to claim 2, **characterized in that** the curved spatial shape of the membrane (9) is approximately that of a hollow ellipsoid calotte that is flattened in its vertex.

4. Fill valve according to claim 2 or 3, **characterized in that** the membrane (9) in an open position of the volume flow control (6) in which the flow pressure is equal or approximately equal to zero is maintained by means of at least one spacer body at an axial distance (a) to the flow direction (s) from the primary opening (8) and that, when the flow pressure increases by forming the curved spatial shape, in particular a spherical shape flattened in its vertex, rests on the primary opening (8) sealingly to the flow direction (s) while entering into a closed position of the volume flow control.

5. Fill valve according to claim 4, **characterized in that** the membrane (9) rests on the at least one spacer body by remaining loose in flow direction (s).

6. Fill valve according to claim 4 or 5, **characterized in that** the at least one spacer body or several spacer bodies form as a whole a ring-shaped bearing surface for the membrane (9), in particular a circular ring-shaped bearing surface (18) that is pointing against the flow direction (s).

7. Fill valve according to claim 6, **characterized in that** at least one radially inner first portion (181) of the bearing surface (18) is designed radially inwards chamfered in flow direction (s).

8. Fill valve according to one of the claims 4 to 7, **characterized in that** the spacer bodies are designed as projections (10) extending away from the carrier (8) against the flow direction (s), wherein the projections (10) opposing with respect to a central axis (m) have a same height (h1, h2).

9. Fill valve according to one of the preceding claims, **characterized in that** the membrane is designed unloaded as a disk, in particular as a circular disk, that is connected axially to the support (7) in its middle by being radially fixed against shifting perpendicularly to the flow direction (s).

10. Fill valve according to claim 9, **characterized in that** the membrane (9) has a plug-in opening (13) in its middle into which a plug-in projection (12) that is provided on the carrier (7) in its middle and that extends against the flow direction (s) engages for forming a plug-in connection.

11. Fill valve according to one of the preceding claims, **characterized in that** at least two primary openings (8), preferably at least four primary openings (8), are provided that are placed on a first radius (r1) with respect to a central rotational symmetry axis (d) and equally spaced on the circumference.

12. Fill valve according to one of the preceding claims, **characterized in that** at least the inner wall of the carrier (s), in particular the inner wall of the carrier (7) that is placed in flow direction (s) behind the primary openings has a roughened design.

13. Fill valve according to one of the preceding claims, **characterized in that** at least two secondary openings (13), preferably at least eight secondary openings (13) are provided that are placed parallel to the flow direction (s) with respect to the central axis (m) preferably on a second radius (r2) and preferably equally spaced on the circumference.

14. Fill valve according to one of the preceding claims, **characterized in that** the sum of the opening cross-sections of the primary openings (8) is greater than the sum of the opening cross-sections of the secondary openings (13).

## Revendications

1. Vanne de remplissage pour remplir un réservoir de chasse d'eau avec un liquide, en particulier avec de l'eau, la vanne de remplissage (1) présentant une arrivée (2) avec un dispositif d'étranglement (4) qui présente un régulateur de débit (3) pour réduire la pression du liquide qui afflue dans le sens d'écoulement (s) qui est configuré comme régulation du débit volumétrique (6) pour maintenir une constance du flux volumétrique du liquide en fonction de la pression d'écoulement du liquide à l'arrivée (2) pour réduire les bruits d'écoulement lors du remplissage du réservoir de chasse d'eau, cependant que la régulation du débit volumétrique (6) présente un support (7) qui s'étend sur la section d'écoulement de l'arrivée (2) et qui a au moins une ouverture primaire (8) qui est placée en pouvant être couverte de manière étanche de manière progressive avec l'augmentation de la pression d'écoulement au moyen d'une membrane placée en amont ou pouvant être dégagée de manière progressive avec la diminution de celle-ci, **caractérisée en ce que** la régulation du débit volumétrique (6) présente au moins une ouverture secondaire (13) qui est configurée ouverte en permanence ce qui garantit qu'une partie du liquide traverse la régulation du débit volumétrique (6) même en cas de recouvrement complètement étanche de la au moins une ouverture primaire (8) tant que la pression d'écoulement du liquide est supérieure à zéro à la au moins une ouverture secondaire (13), cependant que la au moins une ouverture secondaire (13) est délimitée par une paroi intérieure (14) qui est configurée rugueuse et/ou alvéolée pour la réduction de l'émission sonore lors de l'écoulement.

2. Vanne de remplissage selon la revendication 1, **caractérisée en ce que** la membrane (9) est configurée plate dans sa forme de base et qu'elle est placée dans la régulation du débit volumétrique de telle manière qu'elle peut, avec l'augmentation de la pression d'écoulement, être mise en une forme spatiale courbée définie.

3. Vanne de remplissage selon la revendication 2, **caractérisée en ce que** la forme spatiale courbée de la membrane (9) est approximativement celle d'une calotte ellipsoïdale creuse aplatie en son zénith.

4. Vanne de remplissage selon la revendication 2 ou 3, **caractérisée en ce que** la membrane (9) est placée maintenue dans une position ouverte de la régulation du débit volumétrique (6), dans laquelle la pression d'écoulement est égale ou approximativement égale à zéro, au moyen d'au moins un corps d'espacement à une distance axiale (a) par rapport au sens d'écoulement (s) de l'ouverture primaire (8) et, avec l'augmentation de la pression d'écoulement, en formant la forme spatiale courbée, en particulier une forme sphérique aplatie en son zénith, repose sur l'ouverture primaire (8) de manière étanche par rapport au sens d'écoulement (s) en entrant dans une position fermée de la régulation du débit volumétrique (6).

5. Vanne de remplissage selon la revendication 4, **caractérisée en ce que** la membrane (9) repose sur le au moins un corps d'espacement en restant desserrée dans le sens d'écoulement (s).

6. Vanne de remplissage selon la revendication 4 ou 5, **caractérisée en ce que** le au moins un corps d'espacement ou plusieurs corps d'espacement forment en tout une surface d'appui (18) annulaire, en particulier de type anneau circulaire, tournée à l'encontre du sens d'écoulement (s), pour la membrane (9).

7. Vanne de remplissage selon la revendication 6, **caractérisée en ce qu'**au moins une première section (181) de la surface d'appui (18), située radialement à l'intérieur, est configurée biseautée radialement vers l'intérieur dans le sens d'écoulement (s).

8. Vanne de remplissage selon l'une des revendications 4 à 7, **caractérisée en ce que** les corps d'espacement sont configurés comme des saillies qui s'étendent en s'éloignant du support (7) contre le sens d'écoulement (s), cependant que les saillies opposées (10) par rapport à un axe médian (m) présentent une même hauteur (h1, h2).

9. Vanne de remplissage selon l'une des revendications précédentes, **caractérisée en ce que** la membrane (9) est configurée non chargée comme un disque, en particulier comme un disque circulaire qui est relié au support (7) axialement en son milieu en étant radialement fixe en translation, perpendiculairement au sens d'écoulement (s).

10. Vanne de remplissage selon la revendication 9, **caractérisée en ce que** la membrane (9) présente en son centre une ouverture d'emboîtement (13) dans laquelle une saillie d'emboîtement (12) prévue au milieu sur le support (7) et qui s'étend à l'encontre du sens d'écoulement (s) est en prise pour former un raccordement emboîté.

11. Vanne de remplissage selon l'une des revendications précédentes, **caractérisée en ce qu'**au moins deux ouvertures primaires (8), de préférence au moins quatre ouvertures primaires (8) sont prévues qui sont placées sur un premier rayon (r1) par rapport à un axe de symétrie de rotation central (d) et en étant équidistantes sur la circonférence.

12. Vanne de remplissage selon l'une des revendications précédentes, **caractérisée en ce qu'**au moins la paroi intérieure du support (s), en particulier la paroi intérieure du support (7) qui est placée dans le sens d'écoulement (s) derrière les ouvertures primaires, est configurée rugueuse.

13. Vanne de remplissage selon l'une des revendications précédentes, **caractérisée en ce qu'**au moins deux ouvertures secondaires (13), de préférence au moins huit ouvertures secondaires (13) sont prévues qui sont placées sur un second rayon (r2) par rapport à l'axe central (m) parallèlement au sens d'écoulement (s) et de préférence en étant équidistantes sur la circonférence.

14. Vanne de remplissage selon l'une des revendications précédentes, **caractérisée en ce que** la somme des sections d'ouverture des ouvertures primaires (8) est plus grande que la somme des sections d'ouverture des ouvertures secondaires (13).
